# EUROPEAN PATENT APPLICATION

(11) **EP 4 838 773 A1**
(43) Date of publication of application: **11.11.2026**
(21) Application number: 25779507.0
(22) Date of filing: 26.03.2025
(51) Int. Cl.: H02M 1/12

(54) **NOISE SUPPRESSION CIRCUIT AND AIR CONDITIONER**

(30) Priority: 29.03.2024 JP 2024058262
(71) Applicant: DAIKIN INDUSTRIES, LTD., Osaka-shi, Osaka 530-0001 (JP)
(72) Inventor: KOYAMA, Yoshitsugu, Osaka-Shi, Osaka 530-0001 (JP); OKUZONO, Kodai, Osaka-Shi, Osaka 530-0001 (JP)
(74) Representative: Hoffmann Eitle
(86) International application number: PCT/JP2025/012053
(87) International publication number: WO 2025/205959

(57) **Abstract**

Provided is a technology capable of suppressing damage to a semiconductor element of a noise suppression circuit. A power conversion system 1 according to an embodiment of the present disclosure includes an amplifier circuit 62 that includes an operational amplifier 621 to which a detection signal output from a noise detection means 50 for detecting common-mode noise of a propagation path including a power line PL1 connecting between an AC power supply 10 and a power conversion device 30, or a signal derived from the detection signal, is input, and that outputs a signal representing a waveform of a compensation current or a compensation voltage for suppressing the common-mode noise based on the signal input to the operational amplifier 621, a compensation circuit 63 that outputs the compensation current or the compensation voltage to the propagation path based on an output of the amplifier circuit 62, and a circuit breaker 67 that is provided in a signal line between the noise detection means 50 and the operational amplifier 621 and cuts off input of the detection signal or the signal derived from the detection signal from the noise detection means 50 to the amplifier circuit 62.

## Description

### TECHNICAL FIELD

The present disclosure relates to noise suppression circuits and the like.

### BACKGROUND ART

Conventionally, there is known a noise suppression technique for reducing common-mode noise, by detecting the common-mode noise, and outputting a compensation current or a compensation voltage with respect to the detected common-mode noise to a path through which the common-mode noise flows (for example, refer to Patent Document 1).

### PRIOR ART DOCUMENTS

### PATENT DOCUMENTS

Patent Document 1: Japanese Patent No. 3044650

### DISCLOSURE OF THE INVENTION

### PROBLEM TO BE SOLVED BY THE INVENTION

For example, when a detection signal from a common-mode noise detection means or a signal derived from the detection signal is applied to a semiconductor element of a noise suppression circuit in a state where power is not supplied from a drive power supply to the noise suppression circuit, the semiconductor element may become damaged.

One object of the present disclosure is to provide a technology capable of suppressing damage to a semiconductor element of a noise suppression circuit.

### MEANS OF SOLVING THE PROBLEM

A first aspect of the present disclosure provides a noise suppression circuit including:
a generation circuit that includes a semiconductor element to which a detection signal output from a detection means for detecting common-mode noise of a propagation path including a power line connecting between a first electrical device and a second electrical device, or a signal derived from the detection signal, is input, and that outputs a signal representing a waveform of a compensation current or a compensation voltage for suppressing the common-mode noise based on the signal input to the semiconductor element;
a compensation circuit that outputs the compensation current or the compensation voltage to the propagation path, based on an output of the generation circuit; and
a cutoff means that is provided in a signal line between the detection means and the semiconductor element, and that cuts off input of the detection signal from the detection means or the signal derived from the detection signal to the generation circuit.

According to this aspect, by placing the cutoff means in the cutoff state in a case where no power is supplied from the drive power supply to the noise suppression circuit, for example, the noise suppression circuit can cut off the input of the detection signal from the detection means or the signal derived from the detection signal to the semiconductor element of the generation circuit. For this reason, the noise suppression circuit can suppress damage to the semiconductor element of the generation circuit in a state where no power is supplied from the drive power supply to the noise suppression circuit.

According to a second aspect of the present disclosure, on the premise of the above-described first aspect, the cutoff means may cut off the input of the detection signal from the detection means to the generation circuit in a case where a voltage equal to or higher than a driving voltage is not applied to the generation circuit.

According to a third aspect of the present disclosure, on the premise of the above-described second aspect, the cutoff means may pass the detection signal from the detection means to the generation circuit in a case where a voltage equal to or higher than the driving voltage is applied to the generation circuit.

According to a fourth aspect of the present disclosure, on the premise of any one of the above-described first to third aspects, the semiconductor element may be an operational amplifier.

According to a fifth aspect of the present disclosure, on the premise of any one of the above-described first to third aspects, the semiconductor element may be a microcontroller.

According to a sixth aspect of the present disclosure, on the premise of the above-described second or third aspect, the driving voltage may be a minimum value in a range of a power supply voltage of the semiconductor element.

According to a seventh aspect of the present disclosure, on the premise of the above-described third aspect, the cutoff means may switch between a state of passing the detection signal and a state of cutting off the detection signal depending on whether a signal corresponding to the voltage applied to the generation circuit being equal to or higher than the driving voltage is input to the cutoff means.

According to an eighth aspect of the present disclosure, on the premise of any one of the above-described first to seventh aspects, the first electrical device may be an AC power supply, and the second electrical device may be a power conversion device.

According to a ninth aspect of the present disclosure, on the premise of any one of the above-described first to seventh aspects, the first electrical device may be a power conversion device, and the second electrical device may be a motor.

According to a tenth aspect of the present disclosure, on the premise of the above-described eighth or ninth aspect, the power conversion device may include a switching element, and a wide-bandgap semiconductor may be used for the switching element.

An eleventh aspect of the present disclosure provides an air conditioner including the noise suppression circuit according to any one of the above-described first to tenth aspects.

### EFFECTS OF THE INVENTION

According to the above-described aspects of the present disclosure, it is possible to suppress damage to the semiconductor element of the noise suppression circuit.

### BRIEF DESCRIPTION OF THE DRAWINGS

[FIG. 1] FIG. 1 is a diagram illustrating an example of a power conversion system.
[FIG. 2] FIG. 2 is a diagram illustrating another example of the power conversion system.
[FIG. 3] FIG. 3 is a diagram illustrating an example of a refrigerant circuit of an air conditioner.

### MODE OF CARRYING OUT THE INVENTION

Hereinafter, embodiments will be described with reference to the drawings.

### [Configuration of Example of Power Conversion System]

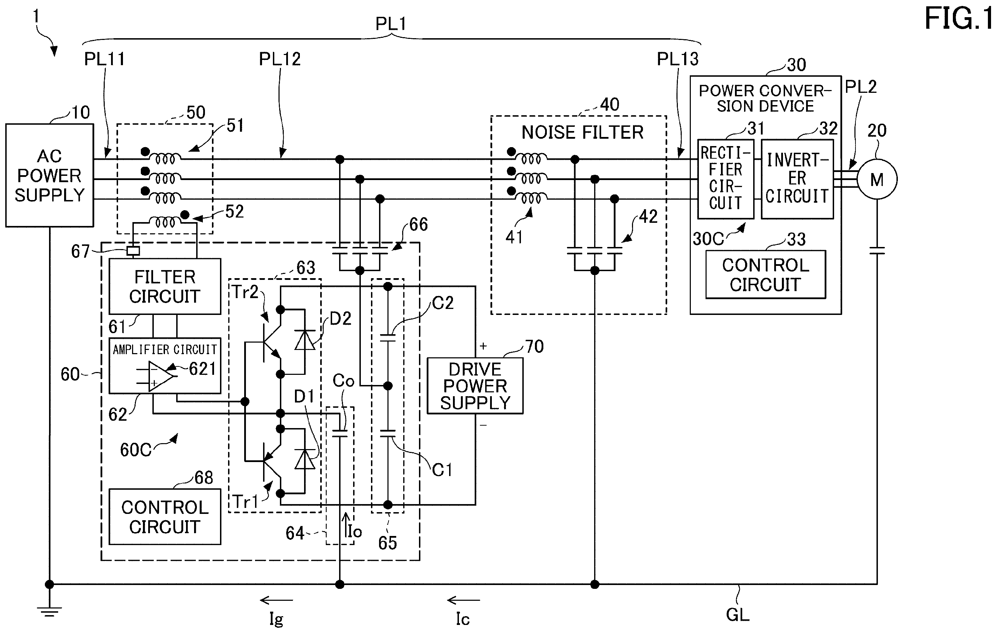

A configuration an example of a power conversion system 1 according to the present embodiment will be described with reference to FIG. 1.

FIG. 1 is a diagram illustrating an example of the power conversion system 1.

As illustrated in FIG. 1, the power conversion system 1 drives a motor 20 using power supplied from an AC power supply 10.

The AC power supply 10 supplies AC power to the power conversion system 1. In this example, the AC power supply 10 supplies three-phase AC power of R-phase, S-phase, and T-phase to the power conversion system 1.

The motor 20 is driven by the three-phase AC power output from the power conversion system 1. For example, the motor 20 is a direct current (DC) brushless motor. Further, the motor 20 may be a motor driven by other three-phase AC power.

The power conversion system 1 includes a power line PL1, a power line PL2, a power conversion device 30, a noise filter 40, a noise detection means 50, an active noise canceller 60, and a drive power supply 70.

The power line PL1 electrically connects between the AC power supply 10 and the power conversion device 30 by three power lines of R-phase, S-phase, and T-phase. The power line PL1 includes power lines PL11 to PL13.

The power line PL2 electrically connects between the power conversion device 30 and the motor 20 by three power lines of U-phase, V-phase, and W-phase.

The power line PL11 connects between the AC power supply 10 and a coil 51 by respective three power lines of R-phase, S-phase, and T-phase. The power line PL12 connects between the coil 51 and a common-mode choke coil 41 of the noise filter 40 by respective three power lines of R-phase, S-phase, and T-phase. The power line PL13 connects between the common-mode choke coil 41 and the power conversion device 30 by respective three power lines of R-phase, S-phase, and T-phase.

The power conversion device 30 drives the motor 20 by converting the AC power supplied through the power line PL1 into three-phase AC power of a predetermined frequency and a predetermined voltage, and outputting the three-phase power to the motor 20 through the power line PL2.

For example, the power conversion device 30 includes a power conversion circuit 30C including a rectifier circuit 31 and an inverter circuit 32, and a control circuit 33.

The rectifier circuit 31 converts the three-phase AC power of R-phase, S-phase, and T-phase supplied through the power line PL13 into direct current power, and outputs the DC power to a direct current (DC) link (also referred to as a "DC link"). For example, the rectifier circuit 31 is a three-phase full-wave rectifier circuit using diodes.

The inverter circuit 32 converts the DC power input from the DC link between the rectifier circuit 31 and the inverter circuit 32 into three-phase AC power of a predetermined frequency and a predetermined voltage, specifically, AC power of U-phase, V-phase, and W-phase, and outputs the three-phase AC power. For example, the inverter circuit 32 includes a switching element, and converts the DC power into the three-phase AC power of the predetermined frequency and the predetermined voltage by a switching operation of the switching element, and outputs the three-phase AC power to the power line PL2.

For example, the switching element is an insulated gate bipolar transistor (IGBT), a metal-oxide-semiconductor field-effect transistor (MOSFET), a high electron mobility transistor (HEMT), or the like. For example, the switching element is configured using silicon (Si) as a main material. Further, the switching element may be configured using a wide-bandgap semiconductor material as the main material. For example, the wide-bandgap semiconductor material is silicon carbide (SiC), gallium nitride (GaN), gallium oxide (Ga₂O₃), carbon (diamond: C), or the like. Moreover, the inverter circuit 32 may include a freewheeling diode made of a semiconductor connected in parallel with the switching element, in addition to the switching element.

The control circuit 33 performs a control process related to the power conversion circuit 30C.

In addition, the control circuit 33 may perform other processes related to the power conversion system 1.

For example, the control circuit 33 performs a process for diagnosis related to an abnormality of the active noise canceller 60 (hereinafter, "abnormality diagnosis"). For example, the abnormality diagnosis includes diagnosis of the presence or absence of the abnormality. Further, the abnormality diagnosis may include diagnosis of the presence or absence of signs of the abnormality and diagnosis of a degree of abnormality (abnormality level).

Functions of the control circuit 33 may be implemented solely by hardware (circuit) between the hardware and software, or may be implemented by a combination of hardware (for example, an integrated circuit (IC)) and software. For example, in the latter case, the control circuit 33 is mainly configured of a microcontroller including a central processing unit (CPU), a memory device, an auxiliary storage device, an interface for input/output, and the like.

The noise filter 40 is a passive noise suppression device that suppresses common-mode noise.

The common-mode noise occurs along with the switching operation of the switching element of the inverter circuit 32. Specifically, the common-mode noise occurs due to noise associated with the switching operation of the switching element leaking to the ground GL through a stray capacitance of the motor 20 or a stray capacitance between a non-illustrated switching element of the power conversion device 30 and a heat sink.

The noise filter 40 includes the common-mode choke coils 41 and Y-capacitors 42.

The common-mode choke coil 41 acts as an inductor with respect to a common-mode noise current (common-mode current) flowing through the power line PL1 to suppress the noise current.

The Y-capacitors 42 have a function of returning the common-mode current flowing out to the ground GL to the inverter circuit 32 as a noise source. The Y-capacitors 42 have one end connected to the power line PL13 and the other end connected to the ground GL.

The ground GL is grounded. For example, the ground GL is a casing of an apparatus including the power conversion system 1. Further, the ground GL may be a dedicated reference potential line.

The noise detection means 50 detects the common-mode noise current (common-mode current) or a noise voltage (common-mode voltage). For example, as illustrated in FIG. 1, the noise detection means 50 detects the common-mode current of the power line PL1. The noise detection means 50 includes a primary-side circuit including the coils 51, and a secondary-side circuit including a coil 52.

The coil 51 is provided in each of the R-phase, S-phase, and T-phase of the power line PL1.

The coil 52 is provided so as to be magnetically coupled to the coils 51. The coil 52 outputs a detection signal corresponding to the common-mode noise of the power line PL1.

The coils 51 and the coil 52 are wound around cores of the same magnetic material, and are arranged so as to have polarities opposite to one another, as indicated by "•" in FIG. 1. The cores of the magnetic material wound with the coils 51 and 52 are toroidal cores, for example, and the magnetic material is ferrite or permalloy, for example. For example, when a current flows to the right through the coil 51 in the FIG. 1, a current flows to the left through the coil 52. That is, the polarity indicated by "•" in FIG. 1 is a polarity according to a direction in which the current flows into.

For example, when a common-mode current flows through the coil 51, a current proportional to the common-mode current is induced in the coil 52. Accordingly, the coils 51 and 52 function as a current detection transformer that detects the common-mode current. Further, the noise detection means 50 may detect the common-mode noise of the ground GL.

The active noise canceller 60 outputs a compensation current or a compensation voltage for suppressing common-mode noise to the power line PL1, the power line PL2, or the ground GL, based on the detection signal output from the coil 52 of the noise detection means 50. The active noise canceller 60 includes a noise suppression circuit 60C including a filter circuit 61, an amplifier circuit 62, a compensation circuit 63, an output section 64, a power supply circuit 65, coupling capacitors 66, and a circuit breaker 67, and a control circuit 68.

The filter circuit 61 passes a signal from which a specific frequency component is removed from the detection signal output from the coil 52, and the signal output from the filter circuit 61 is input to the amplifier circuit 62.

The amplifier circuit 62 amplifies the signal output from the filter circuit 61. For example, the amplifier circuit 62 includes an operational amplifier 621 as a semiconductor element (semiconductor device).

For example, a power supply voltage of the operational amplifier 621 is 2/3 of a DC link voltage Vdc of the power conversion circuit 30C or less. This is because a voltage Vcom of a common-mode noise source (specifically, a potential of a neutral point of the motor 20, which is generated when the motor 20 is driven by the inverter circuit 32) varies in 1/3 increments, and when the power supply voltage of the operational amplifier 621 is in a range of ±1/3 of the DC link voltage Vdc, the common-mode noise caused by the switching operation of the inverter circuit 32 can be canceled without taking into consideration a relationship between the voltage Vcc and an impedance.

The signal output from the amplifier circuit 62 is a signal representing a waveform of the compensation current or the compensation voltage, and is input to the compensation circuit 63. The signal representing the waveform of the compensation current or the compensation voltage refers to a signal that indicates an amplitude and a phase for each frequency in the waveform of the compensation current or the compensation voltage output from the compensation circuit 63. For example, the signal representing the waveform of the compensation current or the compensation voltage output from the amplifier circuit 62 is a current or voltage waveform signal having the same phase for each frequency and a small amplitude with respect to the waveform of the compensation current or the compensation current output from the compensation circuit 63.

The compensation circuit 63 amplifies the signal output from the amplifier circuit 62, and outputs a compensation current or a compensation voltage. The compensation circuit 63 includes transistors Tr1 and Tr2, and diodes D1 and D2.

The transistor Tr1 is connected between one end of the drive power supply 70 and an output capacitor Co of the output section 64. The transistor Tr2 is connected between the other end of the drive power supply 70 and the output capacitor Co of the output section 64.

As illustrated in FIG. 1, in this example, the transistor Tr1 is a PNP type, the transistor Tr2 is an NPN type, and the transistors Tr1 and Tr2 have mutually opposite polarities. Accordingly, the transistors Tr1 and Tr2 constitute a push-pull circuit, and the push-pull circuit functions as an amplifier.

Bases of the transistors Tr1 and Tr2 are connected to one end of the coil 52 via the amplifier circuit 62 and the filter circuit 61, and an interconnection node between the transistors Tr1 and Tr2 is connected to the other end of the coil 52 via the amplifier circuit 62 and the filter circuit 61. Accordingly, the transistors Tr1 and Tr2 perform mutually opposite operations.

The diodes D1 and D2 are respectively connected in anti-parallel with the transistors Tr1 and Tr2 to protect the transistors Tr1 and Tr2.

The output section 64 connects between the compensation circuit 63 and the ground GL, and outputs (also referred to as "injects") the compensation current or the compensation voltage output from the compensation circuit 63 to a path through which the common-mode current flows. The output section 64 includes the output capacitor Co.

The output capacitor Co has one end connected to the interconnection node between the transistors Tr1 and Tr2 of the compensation circuit 63, and the other end connected to the ground GL.

The power supply circuit 65 is connected to the drive power supply 70. The power supply circuit 65 includes capacitors C1 and C2.

The capacitors C1 and C2 are connected in series. The series connection of the capacitors C1 and C2 is connected in parallel with the drive power supply 70 and the compensation circuit 63. Further, a midpoint between the capacitors C1 and C2 is connected to the coupling capacitors 66.

The coupling capacitors 66 each have one end connected to the power line PL12 and the other end connected to the midpoint between the capacitors C1 and C2.

The circuit breaker 67 is provided in a signal line between the noise detection means 50 and the filter circuit 61. The circuit breaker 67 can switch, via the signal line, between a connection state that allows the detection signal from the noise detection means 50 to pass to the filter circuit 61 and a cutoff state that cuts off the detection signal. For example, the circuit breaker 67 is a relay. Further, the circuit breaker 67 may be a semiconductor switch.

For example, the circuit breaker 67 is placed in the cutoff state in a case where power is not supplied from the drive power supply 70 to the amplifier circuit 62 of the active noise canceller 60. This suppresses a situation where a signal output from the noise detection means 50 passes through the filter circuit 61 and the signal passing through the filter circuit 61 is input to the operational amplifier 621 of the amplifier circuit 62 in a state where power is not supplied to the amplifier circuit 62, for example. For this reason, it is possible to suppress a situation where the operational amplifier 621 is damaged by a signal applied to the operational amplifier 621 based on the signal output from the noise detection means 50 in a state where there is no power supply to the operational amplifier 621. The case where power is not supplied from the drive power supply 70 to the amplifier circuit 62 and the compensation circuit 63 of the active noise canceller 60 refers to a case where power of the active noise canceller 60 is not turned on, for example.

The control circuit 68 performs a control process related to the active noise canceller 60.

Further, the control circuit 68 may perform a process for abnormality diagnosis of the active noise canceller 60.

Functions of the control circuit 68 may be implemented solely by hardware (circuit) between the hardware and software, or may be implemented by a combination of hardware (for example, an integrated circuit) and software. For example, in the latter case, the control circuit 58 is mainly configured of a microcontroller including a CPU, a memory device, an auxiliary storage device, an interface for input/output, and the like.

The drive power supply 70 supplies DC driving power to the active noise canceller 60.

The drive power supply 70 may be a DC power supply capable of independently supplying DC power to the active noise canceller 60, or may be a capacitor that uses a DC voltage of the DC link between the rectifier circuit 31 and the inverter circuit 32 of the power conversion circuit 30C as the power supply, for example.

### [Configuration of Second Example of Power Conversion System]

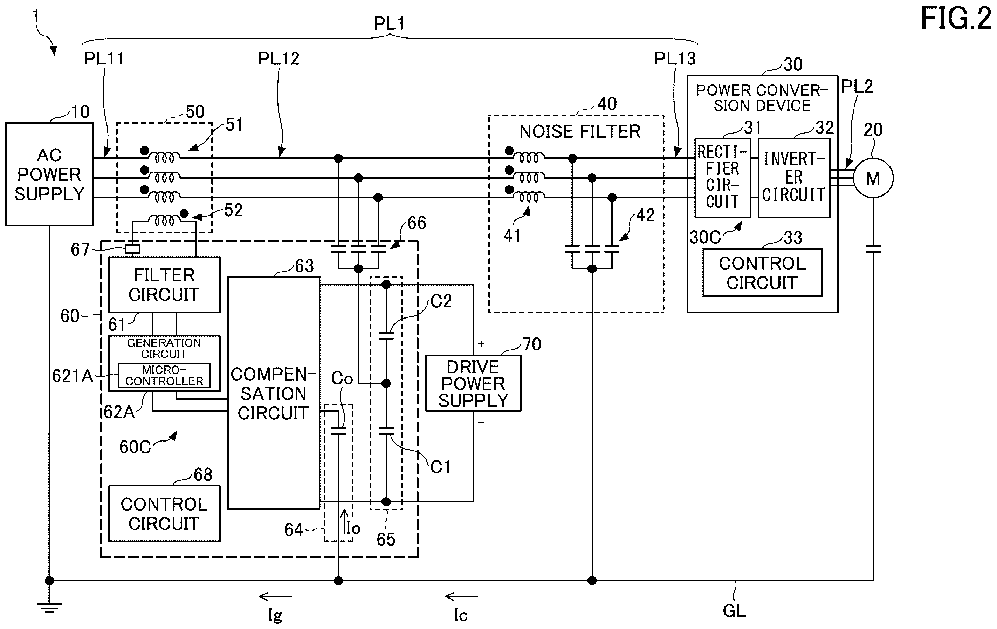

Next, a configuration of a second example of the power conversion system 1 will be described with reference to FIG. 2.

Hereinafter, in this example, the same or corresponding configurations as those of the above-described first example are designated by the same reference numerals, a description will be centered on parts that differ from those of the above-described first example, and a description of the same or corresponding parts as those of the above-described first example may be omitted.

FIG. 2 is a diagram illustrating the second example of the power conversion system 1.

As illustrated in FIG. 2, the power conversion system 1 according to this example mainly differs from the above-described first example in that a generation circuit 62A is provided in place of the amplifier circuit 62.

The generation circuit 62A is connected to the filter circuit 61 by a signal line, and the signal output from the filter circuit 61 is input to the generation circuit 62A. The generation circuit 62A outputs a signal representing the waveform of the compensation current or the compensation current, based on the signal input from the filter circuit 61, by software processing, for example. The signal output from the generation circuit 62A is input to the compensation circuit 63. For example, the generation circuit 62A includes a microcontroller 621A as a semiconductor element (semiconductor device).

For example, a power supply voltage of the microcontroller 621A is 2/3 of the DC link voltage Vdc of the power conversion circuit 30C or less.

Thus, in this example, the power conversion system 1 can generate the signal representing the waveform of the compensation current or the compensation voltage using the microcontroller 621A, and input the generated signal to the compensation circuit 63.

### [Operation of Active Noise Canceller]

Next, an operation of the active noise canceller 60 will be described with reference to FIG. 1 and FIG. 2.

Hereinafter, for the sake of simplicity, a description in this example will be made by ignoring a suppression effect on a common-mode current Ic by the noise filter 40.

The noise detection means 50 detects the common-mode noise of the power line PL1, and drives the transistors Tr1 and Tr2 via the filter circuit 61 and the amplifier circuit 62 or the generation circuit 62A. Specifically, when the detection signal output from the coil 52 of the noise detection means 50 is input to the bases of the transistors Tr1 and Tr2 via the filter circuit 61 and the amplifier circuit 62 or the generation circuit 62A, the detection signal is amplified by the transistors Tr1 and Tr2.

In a case where the common-mode current Ic flows in a direction of an arrow in FIG. 1, the transistor Tr1 is turned on. In this case, the compensation current Io is supplied from the drive power supply 70, and flows from a positive terminal of the drive power supply 70 to a current path connected to a negative terminal of the drive power supply 70, through the capacitor C2, the coupling capacitors 66, the AC power supply 10, the output capacitor Co, and the transistor Tr1. Hence, a reduced common-mode current Ig, in which a compensation current Io is subtracted from the common-mode current Ic, flows to the AC power supply 10.

Further, in a case where the common-mode current Ic flows in a direction opposite to the direction of the arrow in FIG. 1, the transistor Tr2 is turned on. In this case, the compensation current Io is supplied from the drive power supply 70, and flows from the positive terminal of the drive power supply 70 to a current path connecting to the negative terminal of the drive power supply 70, through the transistor Tr2, the output capacitor Co, the AC power supply 10, the coupling capacitors 66, and the capacitor C1. That is, the compensation current Io flows in the direction opposite to the direction of the arrow in FIG. 1. Hence, the reduced common-mode current Ig, in which the compensation current Io is subtracted from the common-mode current Ic, flows to the AC power supply 10 in the direction opposite to the direction of the arrow in FIG. 1.

The compensation current Io flows through the compensation circuit 63 as described above. For this reason, the current supplied from the drive power supply 70 when outputting the compensation current or the compensation voltage is larger in the compensation circuit 63 than in the amplifier circuit 62 or the generation circuit 62A.

Accordingly, the active noise canceller 60 can suppress the common-mode current Ig flowing to the AC power supply 10 by outputting the compensation current Io to the path through which the common-mode current Ic flows. For this reason, the active noise canceller 60 can suppress a situation where the common-mode noise current flows out to a peripheral device through the AC power supply 10 to affect the peripheral device, for example.

### [Method of Switching Between Connection State and Cutoff State of Circuit Breaker]

Next, a method of switching between the connection state and the cutoff state of the circuit breaker 67 will be described.

For example, the circuit breaker 67 is switched from the connection state to the cutoff state in response to a signal input from the outside. Further, the circuit breaker 67 may be switched from the cutoff state to the connection state in response to a signal input from the outside.

For example, the control circuit 68 monitors whether power is supplied from the drive power supply 70 to the amplifier circuit 62 or the generation circuit 62A. Specifically, the control circuit 68 monitors the voltage applied from the drive power supply 70 to the active noise canceller 60, and may determine that power is supplied in a case where the applied voltage is equal to or higher than a predetermined driving voltage, and determine that no power is supplied in a case where the applied voltage is lower than the predetermined driving voltage. For example, the predetermined driving voltage is a minimum value of a range of the power supply voltage of the operational amplifier 621 or the microcontroller 621A. When a transition occurs from the state where power is supplied to the amplifier circuit 62 or the generation circuit 62A from the drive power supply 70 to the state where no power is supplied, the control circuit 68 may output to the circuit breaker 67 a control command for transitioning the circuit breaker 67 from the connection state to the cutoff state. Hence, the circuit breaker 67 can automatically cut off the input of the detection signal from the noise detection means 50 to the filter circuit 61 in conjunction with the transition to the state where no power is supplied to the amplifier circuit 62 or the generation circuit 62A, and maintain that state. Further, when a transition occurs from the state where no power is supplied to the amplifier circuit 62 or the generation circuit 62A from the drive power supply 70 to the state where power is supplied, the control circuit 68 may output to the circuit breaker 67 a control command for transitioning the circuit breaker 67 from the cutoff state to the connection state. Accordingly, the circuit breaker 67 can automatically return to the state of passing the detection signal from the noise detection means 50 to the filter circuit 61 in conjunction with the transition to the state where power is supplied to the amplifier circuit 62 or the generation circuit 62A.

Moreover, in a case where the voltage applied to the amplifier circuit 62 or the generation circuit 62A is equal to or higher than the driving voltage, a signal corresponding to the voltage applied to the amplifier circuit 62 or the generation circuit 62A being equal to or higher than the predetermined driving voltage may be input to the circuit breaker 67.

For example, the signal corresponding to the voltage applied to the amplifier circuit 62 or the generation circuit 62A being equal to or higher than the predetermined driving voltage is a high-level (H-level) signal output from a comparator that compares the voltage applied to the amplifier circuit 62 or the generation circuit 62A with a reference voltage corresponding to the predetermined driving voltage. Specifically, the voltage applied to the amplifier circuit 62 or the generation circuit 62A is input to the comparator, and in a case where the input voltage is equal to or higher than the reference voltage, the comparator outputs a high-level (H-level) signal, and in a case where the input voltage is less than the reference voltage, the comparator outputs a low-level (L-level) signal. Accordingly, the circuit breaker 67 can switch between the connection state and the cutoff state, so as to assume the connection state in the case where the H-level signal is input from the comparator and assume the cutoff state in the case where the H-level signal is not input from the comparator (that is, the L-level signal is input from the comparator).

Further, the power-on (that is, start-up) and power-off (that is, shutdown) of the power conversion device 30 and the power-on (start-up) and power-off (shutdown) of the active noise canceller 60 may be linked in some cases. For example, as described above, such a case occurs when the drive power supply 70 utilizes the DC link voltage of the power conversion circuit 30C. In this case, the circuit breaker 67 may transition from the cutoff state to the connection state in conjunction with the power-on of the power conversion device 30, and transition from the connection state to the cutoff state in conjunction with the power-off of the power conversion device 30. For example, the circuit breaker 67 transitions from the connection state to the cutoff state in response to a control command input from the control circuit 33 of the power conversion device 30 through a predetermined communication line in conjunction with the power-off of the power conversion device 30. Further, the circuit breaker 67 may transition from the cutoff state to the connection state in response to a control command input from the control circuit 33 of the power conversion device 30 in conjunction with the power-on of the power conversion device 30.

Further, the circuit breaker 67 may be manually switched between the connection state and the cutoff state by a user, a worker, or the like who can check whether the voltage applied to the amplifier circuit 62 or the generation circuit 62A is equal to or higher than the driving voltage. For example, upon confirming that the voltage applied to the amplifier circuit 62 or the generation circuit 62A transitioned from a state of being equal to or higher than the driving voltage to a state of not being equal to or higher than the driving voltage, the user, worker, or the like of the power conversion system 1 may manually switch the circuit breaker 67 from the connection state to the cutoff state. For example, the user, worker, or the like can confirm that the voltage applied to the amplifier circuit 62 or the generation circuit 62A transitioned from the state of being equal to or higher than the driving voltage to the state of not being equal to or higher than the driving voltage by the power-off of the active noise canceller 60. Similarly, upon confirming that the voltage applied to the amplifier circuit 62 or the generation circuit 62A transitioned from the state of not being equal to or higher than the driving voltage to the state of being equal to or higher than the driving voltage, the user, worker, or the like may manually switch the circuit breaker 67 from the cutoff state to the connection state. For example, the user, worker, or the like can confirm that the voltage applied to the amplifier circuit 62 or the generation circuit 62A transitioned from the state of being equal to or higher than the driving voltage to the state of not being equal to or higher than the driving voltage by the power-on of the active noise canceller 60.

Thus, in this example, the circuit breaker 67 can automatically or manually switch between the connection state and the cutoff state depending on whether a voltage equal to or higher than the driving voltage is applied to the amplifier circuit 62 or the generation circuit 62A. For this reason, the circuit breaker 67 can maintain the cutoff state in a state where a voltage equal to or higher than the driving voltage is not applied to the amplifier circuit 62 or the generation circuit 62A. For this reason, in a state where a voltage equal to or higher than the driving voltage is not applied to the amplifier circuit 62 or the generation circuit 62A, it is possible to suppress a situation where a signal is input from the filter circuit 61 to the operational amplifier 621 or the microcontroller 621A to damage the operational amplifier 621 or the microcontroller 621A.

### [Other Examples of Power Conversion System]

Next, other examples of the power conversion system 1 will be described.

Variations or modifications may be made as appropriate to the configuration, operation, and the like of the power conversion system 1 according to the above-described embodiment. Hereinafter, examples in which variations, modifications, or the like are made to the configuration, operation, and the like of the power conversion system 1 according to the above-described embodiment will be referred to as "modifications" for the sake of convenience.

For example, in the power conversion system 1 of the above-described embodiment, the AC power supply 10 may supply single-phase AC power to the power conversion system 1 instead of the three-phase AC power.

In addition, in the power conversion system 1 of the above-described embodiment and modifications thereof, the power conversion circuit 30C may be provided in the DC link between the rectifier circuit 31 and the inverter circuit 32, and may be provided with a smoothing circuit including a smoothing capacitor, a smoothing inductor, and the like.

Moreover, in the power conversion system 1 of the above-described embodiment and modifications thereof, the functions of the control circuit 33 may be implemented by a plurality of circuits. For example, among the functions of the control circuit 33, the function of performing the process for abnormality diagnosis of the active noise canceller 60 may be implemented by a diagnostic circuit separate from the control circuit 33. Further, a part or all of the functions of the control circuit 33 may be transferred to the outside of the power conversion device 30.

Further, in the power conversion system 1 of the above-described embodiment and modifications thereof, the noise filter 40 may be omitted.

In addition, in the power conversion system 1 of the above-described embodiment and modifications thereof, the coils 51 may be omitted, and a harness corresponding to the power line PL1 may be simply be arranged so as to be inserted through a toroidal core wound with the coil 52. In this case, the harness corresponding to the power line PL1 is inserted through the toroidal core in a direction so as to have the same polarity as in FIG. 1, specifically, a polarity such that a current flows through the coil 52 in a direction opposite to the direction of the current flowing through the power line PL1 in the FIG. 1.

Moreover, in the power conversion system 1 of the above-described embodiment and modifications thereof, the noise detection means 50 may apply a known method (for example, refer to Japanese Patent No. 5528543 or Japanese Patent No. 7309067) to detect the common-mode noise via a capacitor.

Further, in the power conversion system 1 of the above-described embodiment and modifications thereof, the noise detection means 50 may include the functions of the filter circuit 61. In this case, the filter circuit 61 is omitted, the filter circuit in the noise detection means 50 outputs a signal from which a specific frequency component is removed from the detection signal, and the signal from which the specific frequency component is removed from the detection signal is input to the operational amplifier 621 of the amplifier circuit 62 or the microcontroller 621A of the generation circuit 62A.

In addition, in the power conversion system 1 of the above-described embodiment and modifications thereof, the filter circuit 61 may be omitted. In this case, the detection signal output from the noise detection means 50 is input to the operational amplifier 621 of the amplifier circuit 62 or the microcontroller 621A of the generation circuit 62A.

Moreover, in the second example of the power conversion system 1 of the above-described embodiment and modifications thereof, the functions of the generation circuit 62A may be implemented by the control circuit 68 including a microcontroller. In this case, the generation circuit 62A is omitted.

Further, in the power conversion system 1 of the above-described embodiment and modifications thereof, the functions of the amplifier circuit 62 and the generation circuit 62A may be transferred to the outside of the active noise canceller 60. In this case, the amplifier circuit 62 and the generation circuit 62A are omitted. For example, the detection signal from the noise detection means 50 or the signal output from the filter circuit 61 is input to the control circuit 33 of the power conversion device 30 through a predetermined communication line. Further, the control circuit 33 generates a signal representing the waveform of the compensation current or the compensation voltage based on the input signal, and transmits the generated signal to the active noise canceller 60 through a predetermined communication line, and the signal representing the waveform of the compensation current or the compensation voltage is input to the compensation circuit 63.

In addition, in the power conversion system 1 of the above-described embodiment and modifications thereof, the diodes D1 and D2 of the compensation circuit 63 may be omitted.

Moreover, in the power conversion system 1 of the above-described embodiment and modifications thereof, either one of the amplifier circuit 62 and the compensation circuit 63 may be omitted.

Further, in the power conversion system 1 of the above-described embodiment and modifications thereof, the output section 64 may have a resistor connected in series with the output capacitor Co, in addition to the output capacitor Co.

In addition, in the power conversion system 1 of the above-described embodiment and modifications thereof, the output capacitor Co of the output section 64 may be omitted. In this case, the output section 64 may connect the compensation circuit 63 to the ground GL via a resistor, or may connect the compensation circuit 63 directly to the ground GL.

Moreover, in the power conversion system 1 of the above-described embodiment and modifications thereof, the output section 64 may be configured to output the compensation current or the compensation voltage to the power line PL12.

Further, in the power conversion system 1 of the above-described embodiment and modifications thereof, the output section 64 may apply a known method (for example, refer to Japanese Patent No. 5528543 or Japanese Patent No. 7309067) to output the compensation current or the compensation voltage to the power line PL1 by magnetic coupling. In this case, the output section 64 includes a primary coil magnetically coupled to a harness corresponding to the power line PL1 or the ground GL, and a toroidal core wound with the primary coil, and the harness corresponding to the power line PL1 or the ground GL is inserted through the toroidal core. In addition, a coil wound around the toroidal core may be formed in the harness corresponding to the power line PL1 or the ground GL.

Moreover, in the power conversion system 1 of the above-described embodiment and modifications thereof, the output section 64 may apply a known method (for example, refer to Japanese Patent No. 5248713) to output the compensation current or the compensation voltage to the power line PL1 via a capacitor. In this case, the output section 64 includes a capacitor having one terminal connected to the power line PL1, and an impedance having one terminal grounded and the other terminal connected to the other terminal of the capacitor, and an output line of the compensation circuit 63 is connected to a midpoint between the capacitor and the impedance.

Further, in the power conversion system 1 of the above-described embodiment and modifications thereof, the circuit breaker 67 may be provided in a signal line between the filter circuit 61 and the amplifier circuit 62 or the generation circuit 62A. Further, the circuit breaker 67 may be provided in a signal line of a stage preceding the operational amplifier 621 in the amplifier circuit 62, or in a signal line of a stage preceding the microcontroller 621A in the generation circuit 62A. Specifically, the amplifier circuit 62 includes another circuit provided in the stage preceding the operational amplifier 621 (for example, an impedance circuit for increasing an input impedance of the operational amplifier 621) in addition to the operational amplifier 621, for example, and the circuit breaker 67 is provided in a signal line between the other circuit of the preceding stage and the operational amplifier 621. Similarly, the generation circuit 62A includes another circuit provided in the stage preceding the microcontroller 621A in addition to the microcontroller 621A, for example, and the circuit breaker 67 is provided in a signal line between the other circuit and the operational amplifier 621. That is, the circuit breaker 67 may be appropriately arranged in a signal line between the noise detection means 50 (specifically, the coil 52) and the operational amplifier 621 in the amplifier circuit 62, or between the microcontroller 621A in the generation circuit 62A.

In addition, in the power conversion system 1 of the above-described embodiment and modifications thereof, the active noise canceller 60 may be provided so that the compensation current Io flows between the DC link of the power conversion circuit 30C and the ground GL. For example, as described above, in the case where the drive power supply 70 utilizes the DC voltage of the DC link of the power conversion circuit 30C, the compensation current Io flows between the DC link and the ground GL through a power path. In this case, the noise detection means 50 may be provided so as to detect the common-mode noise of the power line PL1, or may be provided so as to detect the common-mode noise of the DC link of the power conversion circuit 30C.

Moreover, in the power conversion system 1 of the above-described embodiment and modifications thereof, the active noise canceller 60 may be provided so that the compensation current Io flows between the power line PL2 between the power conversion device 30 and the motor 20, and the ground GL. For example, one ends of the coupling capacitors 66 are connected to each of the power lines of U-phase, V-phase, and W-phase of the power line PL2, respectively. In this case, the noise detection means 50 may be provided so as to detect the common-mode noise of the power line PL1, or may be provided so as to detect the common-mode noise of the power line PL2.

Further, in the power conversion system 1 of the above-described embodiment and modifications thereof, the drive power supply 70 may be included in the active noise canceller 60.

### [Application Example of Power Conversion System]

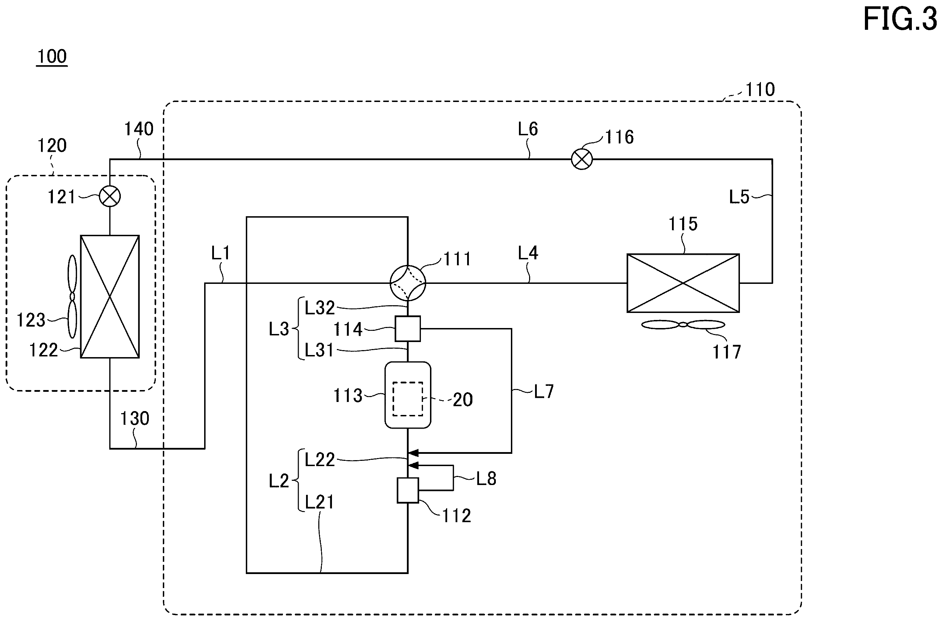

Next, an application example of the power conversion system 1 according to the present embodiment will be described with reference to FIG. 3. Specifically, an air conditioner 100 equipped with the power conversion system 1 according to the present embodiment is mounted will be described.

FIG. 3 is a diagram illustrating an example of a refrigerant circuit of the air conditioner 100.

As illustrated in FIG. 3, the air conditioner 100 includes an outdoor unit 110, an indoor unit 120, and refrigerant paths 130 and 140. The air conditioner 100 operates a refrigeration cycle configured of the outdoor unit 110, the indoor unit 120, the refrigerant paths 130 and 140, and the like, to control the temperature, humidity, and the like of a room where the indoor unit 120 is installed.

The outdoor unit 110 is arranged outside a building, which serves as a controlled object including the temperature and the like. The outdoor unit 110 is connected to one end of each of the refrigerant paths 130 and 140, sucks a refrigerant from either one of the refrigerant paths 130 and 140, and discharges the refrigerant to the other of the refrigerant paths 130 and 140.

The indoor unit 120 is arranged inside the building, which serves as the controlled object including temperature and the like. The indoor unit 120 is connected to the other end of each of the refrigerant paths 130 and 140, sucks the refrigerant from either one of the refrigerant paths 130 and 140, and discharges the refrigerant to the other of the refrigerant paths 130 and 140.

The refrigerant paths 130 and 140 are configured of pipes, for example, and connect between the outdoor unit 110 and the indoor unit 120 so that the refrigerant can circulate between the outdoor unit 110 and the indoor unit 120.

The outdoor unit 110 includes refrigerant paths L1 to L6, oil paths L7 and L8, a four-way switching valve 111, an accumulator 112, a compressor 113, an oil separator 114, an outdoor heat exchanger 115, an outdoor expansion valve 116, and a fan 117.

The refrigerant paths L1 to L6 are configured as pipes, for example.

The refrigerant path L1 connects between one end of the refrigerant path 130 outside the outdoor unit 110 and the four-way switching valve 111.

The refrigerant path L2 connects between the four-way switching valve 111 and an inlet of the compressor 113. The refrigerant path L2 includes refrigerant paths L21 and L22.

The refrigerant path L21 connects between the four-way switching valve 111 and the accumulator 112. The refrigerant path L22 connects between the accumulator 112 and the inlet of the compressor 113.

The refrigerant path L3 connects between the four-way switching valve 111 and an outlet of the compressor 113. The refrigerant path L3 includes refrigerant paths L31 and L32.

The refrigerant path L31 connects between the outlet of the compressor 113 and the oil separator 114. The refrigerant path L32 connects between the four-way switching valve 111 and the oil separator 114.

The refrigerant path L4 connects between the four-way switching valve 111 and the outdoor heat exchanger 115.

The refrigerant path L5 connects between the outdoor heat exchanger 115 and the outdoor expansion valve 116.

The refrigerant path L6 connects between one end of the refrigerant path 140 outside the outdoor unit 110 and the outdoor expansion valve 116.

The oil path L7 is configured as a pipe, for example, and is used to flow oil separated by the oil separator 114 into the refrigerant path L22, and return the oil to the compressor 113 through the refrigerant path L22.

For example, a liquid-phase refrigerant (hereinafter, "liquid refrigerant") may be dissolved in the oil passing through the oil path L7. That is, not only the oil but also the liquid refrigerant flows through the oil path L7.

The oil path L8 is configured as a pipe, for example, and is used to flow the oil including the liquid refrigerant and separated by the accumulator 112 into the refrigerant path L22, and return the oil to the compressor 113 through the refrigerant path L22.

The four-way switching valve 111 reverses a circulation flow between a case of a cooling operation and a case of a heating operation of the air conditioner 100.

During the cooling operation of the air conditioner 100, the four-way switching valve 111 connects the paths indicated by the solid line in FIG. 3. Specifically, during the cooling operation of the air conditioner 100, the four-way switching valve 111 connects between the refrigerant path L1 and the refrigerant path L2, and between the refrigerant path L3 and the refrigerant path L4.

On the other hand, in the case of the heating operation of the air conditioner 100, the four-way switching valve 111 connects the paths indicated by the dotted line in FIG. 3. Specifically, during the heating operation of the air conditioner 100, the four-way switching valve 111 connects between the refrigerant path L4 and the refrigerant path L2, and between the refrigerant path L1 and the refrigerant path L3.

The accumulator 112 separates the liquid refrigerant included in the refrigerant sucked from the refrigerant path L21, and discharges the refrigerant from which a part or all of the liquid refrigerant is removed to the refrigerant path L22. The liquid refrigerant separated by the accumulator 112 includes oil. The accumulator 112 is provided with an oil discharge port connected to the oil path L8, and the oil including the separated refrigerant flows out to the oil path L8 through the oil discharge port, and is returned to the compressor 113 through the oil path L8 and the refrigerant path L22.

The compressor 113 is driven by the motor 20, sucks the refrigerant from the refrigerant path L22, compresses the refrigerant to a high pressure, and discharges the compressed refrigerant to the refrigerant path L31. Accordingly, the power conversion system 1 can control the operation of the compressor 113 by driving the motor 20.

During the cooling operation of the air conditioner 100, the high-temperature and high-pressure refrigerant compressed by the compressor 113 flows into the outdoor heat exchanger 115 through the refrigerant path L3 and the refrigerant path L4.

On the other hand, during the heating operation of the air conditioner 100, the high-temperature and high-pressure refrigerant compressed by the compressor 113 flows out to the refrigerant path 130 outside the outdoor unit 110 through the refrigerant path L3 and the refrigerant path L1. Further, the high-temperature and high-pressure refrigerant flows into the indoor unit 120 through the refrigerant path 130.

The oil separator 114 separates oil from the refrigerant flowing in from the refrigerant path L31, and flows out the refrigerant after a part or all of the oil is separated and removed to the refrigerant path L32. In addition, the oil separator 114 is provided with an oil discharge port connected to the oil path L7, and the oil separated from the refrigerant flows out to the oil path L7 through the oil discharge port, and is returned to the compressor 113 through the oil path L7 and the refrigerant path L22.

The outdoor heat exchanger 115 performs a heat exchange between outdoor air and the refrigerant passing through the inside. Specifically, a fan 117 is provided alongside the outdoor heat exchanger 115, and the outdoor heat exchanger 115 performs a heat exchange between the outdoor air blown by the fan 117 and the refrigerant flowing through the inside.

During the cooling operation of the air conditioner 100, the outdoor heat exchanger 115 causes the high-temperature and high-pressure refrigerant compressed by the compressor 113, which flows in from the refrigerant path L4, to release heat to the outdoor air, and flows out the condensed and liquefied refrigerant (liquid refrigerant) to the refrigerant path L5.

Further, during the heating operation of the air conditioner 100, the outdoor heat exchanger 115 causes a low-temperature and low-pressure liquid refrigerant flowing in from the refrigerant path L5 to absorb heat from the outdoor air, and flows out the evaporated refrigerant to the refrigerant path L4.

During the heating operation of the air conditioner 100, the outdoor expansion valve 116 is closed to a predetermined opening degree, and depressurizes the refrigerant (liquid refrigerant) flowing in from the refrigerant path L6 to a predetermined pressure. On the other hand, during the cooling operation of the air conditioner 100, the outdoor expansion valve 116 is fully opened, and passes the refrigerant (liquid refrigerant) from the refrigerant path L5 to the refrigerant path L6. For example, the outdoor expansion valve 116 is a solenoid valve.

The indoor unit 120 includes an indoor expansion valve 121, an indoor heat exchanger 122, and a fan 123.

During the cooling operation of the air conditioner 100, the indoor expansion valve 121 is closed to a predetermined opening degree, and depressurizes the subcooled liquid refrigerant flowing in from the refrigerant path 140 to a predetermined pressure. On the other hand, during the heating operation of the air conditioner 100, the indoor expansion valve 121 is fully opened, and passes the refrigerant (liquid refrigerant) flowing out from the indoor heat exchanger 122 toward the refrigerant path 140. For example, the indoor expansion valve 121 is a solenoid valve.

The indoor heat exchanger 122 performs heat exchange between indoor air and the refrigerant passing through the inside. Specifically, by the action of the fan 123 provided in the indoor unit 120, the indoor air passes around the indoor heat exchanger 122, and promotes a heat exchange with the refrigerant inside the indoor heat exchanger 122. Further, by the action of the fan 123, the indoor air that exchanged heat with the refrigerant inside the indoor heat exchanger 122 is sent out to the outside of the indoor unit 120, whereby the indoor cooling or heating is achieved.

During the cooling operation of the air conditioner 100, the indoor heat exchanger 122 causes the low-temperature and low-pressure liquid refrigerant depressurized by the indoor expansion valve 121 to absorb heat from the indoor air, and lowers the temperature of the indoor air.

On the other hand, during the heating operation of the air conditioner 100, the indoor heat exchanger 122 causes the high-temperature and high-pressure refrigerant flowing in from the outdoor unit 110 through the refrigerant path 130 to release heat to the indoor air, and raises the temperature of the indoor air.

Thus, in this example, the power conversion system 1 according to the present embodiment is applied to the air conditioner 100 in a form mounted on the air conditioner 100.

The power conversion system 1 according to the present embodiment may be applied to a refrigeration apparatus different from the air conditioner 100.

### [Functions]

Next, the functions of the noise suppression circuit and the air conditioner according to the present embodiment will be described.

In a first aspect of the present embodiment, a noise suppression circuit includes a generation circuit, a compensation circuit, and a cutoff means. For example, the noise suppression circuit is the above-described noise suppression circuit 60C. For example, the generation circuit is the above-described amplifier circuit 62 or generation circuit 62A. For example, the compensation circuit is the above-described compensation circuit 63. For example, the cutoff means is the above-described circuit breaker 67. Specifically, the generation circuit includes a semiconductor element input with a detection signal output from a detection means for detecting common-mode noise of a propagation path including a power line connecting between a first electrical device and a second electrical device, or a signal derived from the detection signal, and outputs a signal representing a waveform of a compensation current or a compensation voltage for suppressing the common-mode noise based on the signal input to the semiconductor element. The signal representing the waveform of the compensation current or the compensation voltage refers to a signal that indicates an amplitude and a phase for each frequency in the waveform of the compensation current or the compensation voltage output from the compensation circuit. For example, the first electrical device and the second electrical device are the above-described AC power supply 10 and power conversion device 30, respectively, and for example, the power line is the above-described power line PL1. In addition, the first electrical device and the second electrical device may be the above-described power conversion device 30 and motor 20, for example, respectively, and the power line may be the above-described power line PL2, for example. For example, the detection means is the above-described noise detection means 50. For example, the semiconductor element is the above-described operational amplifier 621 or the microcontroller 621A. Moreover, the signal derived from the detection signal is the signal output from the above-described filter circuit 61, for example. The compensation circuit outputs the compensation current or the compensation voltage to the propagation path, based on the output of the generation circuit. Further, the cutoff means is provided in a signal line between the detection means and the semiconductor element, and cuts off the input of the detection signal from the detection means or the signal derived from the detection signal to the generation circuit.

Accordingly, in a case where the power is not supplied from the drive power supply to the noise suppression circuit, for example, the cutoff means is set to the cutoff state, whereby the noise suppression circuit can cut off the input of the detection signal from the detection means or the signal derived from the detection signal to the semiconductor element of the generation circuit. For this reason, the noise suppression circuit can suppress damage to the semiconductor element of the generation circuit in a state where no power is supplied from the drive power supply to the noise suppression circuit.

Further, in a second aspect of the present embodiment, on the premise of the above-described first aspect, the cutoff means may cut off the input of the detection signal from the detection means to the generation circuit in a case where a voltage equal to or higher than the driving voltage is not applied to the generation circuit.

Hence, in a case where it can be determined that no power is supplied from the drive power supply to the generation circuit, the noise suppression circuit can automatically cut off the input of the detection signal from the detection means or the signal derived from the detection signal to the generation circuit using the cutoff means.

Further, in a third aspect of the present embodiment, on the premise of the above-described second aspect, the cutoff means may pass the detection signal from the detection means to the generation circuit in a case where a voltage equal to or higher than the driving voltage is applied to the generation circuit.

Accordingly, in a case where it can be determined that power is supplied from the drive power supply to the generation circuit, the noise suppression circuit can automatically transition from a state of cutting off the input of the detection signal from the detection means or the signal derived from the detection signal to the generation circuit to a state of passing the input.

In addition, in a fourth aspect of the present embodiment, on the premise of any one of the first to third aspects, the semiconductor element may be an operational amplifier. The operational amplifier is the above-described operational amplifier 621, for example.

Accordingly, the noise suppression circuit can suppress damage to the operational amplifier in a state where no power is supplied from the drive power supply to the noise suppression circuit.

Moreover, in a fifth aspect of the present embodiment, on the premise of any one of the first to fourth aspects, the semiconductor element may be a microcontroller. The microcontroller is the above-described microcontroller 621A, for example.

Hence, the noise suppression circuit can suppress damage to the microcontroller in a state where no power is supplied from the drive power supply to the noise suppression circuit.

Further, in a sixth aspect of the present embodiment, on the premise of the above-described second or third aspect, the driving voltage may be a minimum value of a range of a power supply voltage of the semiconductor element.

Accordingly, in a case where no power of the driving voltage equal to or higher than the minimum value of the range of the power supply voltage is supplied to the semiconductor element, the noise suppression circuit can suppress the input of the detection signal from the detection means or the signal derived from the detection signal to the semiconductor element using the cutoff means.

In addition, in a seventh aspect of the present embodiment, on the premise of the above-described third aspect, the cutoff means may switch between a state of passing the detection signal and a state of cutting off the detection signal depending on whether a signal corresponding to the voltage applied to the generation circuit being equal to or higher than the driving voltage is input to the cutoff means.

Accordingly, the noise suppression circuit can automatically switch between the state of passing the detection signal and the state of cutting off the detection signal by linking with the voltage applied to the generation circuit.

Moreover, in an eighth aspect of the present embodiment, on the premise of any one of the first to seventh aspects, the first electrical device may be an AC power supply, and the second electrical device may be a power conversion device. For example, the AC power supply is the above-described AC power supply 10, and for example, the power conversion device is the above-described power conversion device 30.

Hence, the noise suppression circuit can suppress the common-mode noise caused by the switching operation of the power conversion device, and suppress outflow of the common-mode noise from the AC power supply to the outside.

Further, in a ninth aspect of the present embodiment, on the premise of any one of the first to seventh aspects, the first electrical device may be a power conversion device, and the second electrical device may be a motor. For example, the power conversion device is the above-described power conversion device 30, and for example, the motor is the above-described motor 20.

Accordingly, the noise suppression circuit can suppress the common-mode noise caused by the switching operation of the power conversion device, and suppress leakage of the common-mode noise from the motor to the power supply side through a stray capacitance.

In addition, in a tenth aspect of the present embodiment, on the premise of the above-described eighth or ninth aspect, the power conversion device may include a switching element, and a wide-bandgap semiconductor may be used for the switching element.

Hence, the noise suppression circuit can suppress the common-mode noise caused by the switching operation of the wide-bandgap semiconductor.

Moreover, in an eleventh aspect of the present embodiment, an air conditioner may include the noise suppression circuit according to any one of the first to tenth aspects. For example, the air conditioner is the above-described air conditioner 100.

Accordingly, the noise suppression circuit is applied to the air conditioner, and can suppress the common-mode noise during operation of a motor that drives the air conditioner.

Although the embodiments are described heretofore, it will be understood that various variations in form and details can be made without departing from the spirit and scope of the claims.

Lastly, this application is based upon and claims priority to Japanese Patent Application No. 2024-058262 filed on March 29, 2024, the entire contents of which are incorporated herein by reference.

### DESCRIPTION OF THE REFERENCE NUMERALS

1: Power conversion system
10: AC power supply
20: Motor
30: Power conversion device
30C: Power conversion circuit
31: Rectifier circuit
32: Inverter circuit
33: Control circuit
40: Noise filter
41: Common-mode choke coil
42: Y-capacitor
50: Noise detection means
51: Coil
52: Coil
60: Active noise canceller
60C: Noise suppression circuit
61: Filter circuit
62: Amplifier circuit
62A: Generation circuit
63: Compensation circuit
64: Output section
65: Power supply circuit
66: Coupling capacitor
67: Circuit breaker
68: Control circuit
70: Drive power supply
100: Air conditioner
621: Operational amplifier
621A: Microcontroller
C1, C2: Capacitor
Co: Output capacitor
D1, D2: Diode
GL: Ground
PL1, PL2: Power line
PL11, PL12, PL13: Power line
Tr1, Tr2: Transistor

## Claims

1. A noise suppression circuit comprising:
a generation circuit (62, 62A) that includes a semiconductor element (621, 621A) to which a detection signal output from a detection means for detecting common-mode noise of a propagation path including a power line (PL1, PL2) connecting between a first electrical device (10, 30) and a second electrical device (30, 20), or a signal derived from the detection signal, is input, and that outputs a signal representing a waveform of a compensation current or a compensation voltage for suppressing the common-mode noise based on the signal input to the semiconductor element (621, 621A);
a compensation circuit (63) that outputs the compensation current or the compensation voltage to the propagation path, based on an output of the generation circuit (62, 62A); and
a cutoff means (67) that is provided in a signal line between the detection means and the semiconductor element (621, 621A), and that cuts off input of the detection signal from the detection means or the signal derived from the detection signal to the generation circuit (62, 62A).

2. The noise suppression circuit as claimed in claim 1, wherein the cutoff means (67) cuts off the input of the detection signal from the detection means to the generation circuit (62, 62A) in a case where a voltage equal to or higher than a driving voltage is not applied to the generation circuit (62, 62A).

3. The noise suppression circuit as claimed in claim 2, wherein the cutoff means (67) passes the detection signal from the detection means to the generation circuit (62, 62A) in a case where a voltage equal to or higher than the driving voltage is applied to the generation circuit (62, 62A).

4. The noise suppression circuit as claimed in any one of claims 1 to 3, wherein the semiconductor element (621, 621A) is an operational amplifier (621).

5. The noise suppression circuit as claimed in any one of claims 1 to 3, wherein the semiconductor element (621, 621A) is a microcontroller (621A).

6. The noise suppression circuit as claimed in claim 2 or 3, wherein the driving voltage is a minimum value in a range of a power supply voltage of the semiconductor element (621, 621A).

7. The noise suppression circuit as claimed in claim 3, wherein the cutoff means (67) switches between a state of passing the detection signal and a state of cutting off the detection signal depending on whether a signal corresponding to the voltage applied to the generation circuit (62, 62A) being equal to or higher than the driving voltage is input to the cutoff means.

8. The noise suppression circuit as claimed in any one of claims 1 to 7, wherein:
the first electrical device (10, 30) is an AC power supply (10), and
the second electrical device (30, 20) is a power conversion device (30).

9. The noise suppression circuit as claimed in any one of claims 1 to 7, wherein:
the first electrical device (10, 30) is a power conversion device (30), and
the second electrical device (30, 20) is a motor (20).

10. The noise suppression circuit as claimed in claim 8 or 9, wherein:
the power conversion device (30) includes a switching element, and
a wide-bandgap semiconductor is used for the switching element.

11. An air conditioner comprising the noise suppression circuit (60C) according to any one of claims 1 to 10.
